# EUROPÄISCHE PATENTSCHRIFT

(11) **EP 3 023 368 B1**
(45) Veröffentlichungstag und Bekanntmachung des Hinweises auf die Patenterteilung: **31.05.2017**
(21) Anmeldenummer: 15180894.6
(22) Anmeldetag: 13.08.2015
(51) Int. Cl.: B65G 47/51

(54) **PUFFERTISCH FÜR BEHÄLTER**
STORAGE TABLE FOR CONTAINERS
TABLE TAMPON POUR RECIPIENT

(30) Priorität: 20.11.2014 DE 202014105593 U
(43) Veröffentlichungstag der Anmeldung: 25.05.2016
(73) Patentinhaber: Krones AG, 93073 Neutraubling (DE)
(72) Erfinder: Winzinger, Frank, 93073 Neutraubling (DE)
(74) Vertreter: Grünecker Patent- und Rechtsanwälte PartG mbB

(56) Entgegenhaltungen:
- DE-A1-102008 014 831
- DE-U1-202004 016 069
- DE-U1-202006 000 870
- US-A1- 2002 125 107

## Beschreibung

Die Erfindung betrifft einen Puffertisch für Behälter gemäß Oberbegriff des Anspruchs 1 und ein Verfahren zum Puffern von Behältern gemäß dem Oberbegriff von Anspruch 15.

Ein gattungsgemäßer Puffertisch für Behälter, wie beispielsweise aufrecht stehend transportierte Flaschen, ist aus der DE 10 2011 015 670 A1 bekannt. Demnach umfasst ein derartiger Puffertisch beispielsweise eine Zulaufbahn und eine parallel dazu und entgegengesetzt laufende Rücklaufbahn, die von einem im Pufferbetrieb im Wesentlichen ortsfesten Transferstreifen voneinander getrennt sind. Zulaufbahn, Transferstreifen und Rücklaufbahn sind dann bezüglich ihrer Oberflächen fluchtend ausgebildet, so dass die Behälter beispielsweise mittels Staudruck von einer quer zur Zulaufbahn und Rücklaufbahn verlaufenden Transfereinrichtung von der Zulaufbahn auf die Rücklaufbahn übergeleitet werden. Die Transfereinrichtung lässt sich entlang der Zulaufbahn und Rücklaufbahn verschieben, um die Größe des Puffertisches an den zulaufenden und rücklaufenden Produktstrom anzupassen. DE 20 2006 000 870 U1, sowie US 2002/0125107 offenbaren dem Oberbegriff der Ansprüche 1 und 15. Problematisch beim gattungsgemäßen Puffertisch ist eine ruckartige Beschleunigung der Behälter beim Übergang von der Zulaufbahn auf den Transferstreifen und vom Transferstreifen auf die Rücklaufbahn. Behälter können dadurch umfallen und einen ordnungsgemäßen Betrieb des Puffertisches beeinträchtigen oder gar verhindern. Es sind dann Eingriffe durch Bedienpersonal nötig, wodurch ein unerwünscht hoher Personalbedarf für den Puffertisch entsteht.

Es besteht daher der Bedarf für diesbezüglich verbesserte Puffertische und Verfahren zum Puffern.

Die gestellte Aufgabe wird mit einem Puffertisch gemäß Anspruch 1 gelöst. Demnach umfasst dieser eine Zulaufbahn und eine gegenläufig dazu angetriebene Rücklaufbahn sowie einen dazwischen ausgebildeten Transferstreifen. Ferner ist eine im Wesentlichen quer dazu ausgebildete Transfereinrichtung zum Überleiten der Behälter von der Zulaufbahn über den Transferstreifen auf die Rücklaufbahn ausgebildet. Erfindungsgemäß umfasst die Zulaufbahn ein äußeres Förderband und ein zwischen diesem und dem Transferstreifen verlaufendes inneres Förderband, das langsamer angetrieben ist als das äußere Förderband der Zulaufbahn, und/oder die Rücklaufbahn umfasst ein äußeres Förderband und ein zwischen diesem und dem Transferstreifen verlaufendes inneres Förderband, das langsamer angetrieben ist als das äußere Förderband der Rücklaufbahn. Die langsamere Geschwindigkeit des inneren Förderbands ist beispielsweise durch ein Untersetzungsgetriebe fest oder einstellbar vorgegeben oder kann mittels elektrischer Steuerung an separaten Antriebsmotoren für das innere und äußere Förderband gezielt eingestellt oder sogar geregelt werden.

Die Geschwindigkeit des wenigstens einen äußeren Förderbands entspricht dann im Wesentlichen der Fördergeschwindigkeit der zugehörigen Bahn, also der Zulaufbahn und/oder der Rücklaufbahn. Folglich wird die Gefahr einer übermäßig ruckartigen Beschleunigung der Behälter beim Übergang von der Zulaufbahn auf den Transferstreifen und vom Transferstreifen auf die Rücklaufbahn durch Zwischenschalten der inneren Förderbänder verringert. Dies ermöglicht einen Transfer aufrecht stehender Behälter ohne Umfallen im Bereich der Transfereinrichtung. Die Behälter sind beispielsweise Flaschen aus Glas oder Kunststoff.

Vorzugsweise beträgt die Geschwindigkeit des inneren Förderbands dann jeweils 30% bis 90% der Geschwindigkeit des benachbarten äußeren Förderbands. Besonders vorteilhaft ist eine Geschwindigkeit des inneren Förderbands von jeweils 40% bis 75% der Geschwindigkeit des benachbarten äußeren Förderbands.

Der Puffertisch ist vorzugsweise für den aufrecht stehenden Transport der Behälter und das Überleiten der Behälter in stehender Lage ausgebildet (eine Verlängerung einer Behälterlängsachse schneidet vorzugsweise den Erdmittelpunkt). Zulaufbahn und Rücklaufbahn sind vorzugsweise parallel zueinander ausgebildet. Die Transfereinrichtung arbeitet vorzugsweise passiv mittels Staudruck. Denkbar wäre allerdings auch eine mittels Förderband aktiv arbeitende Transfereinrichtung.

Denkbar wäre zudem, dass die Transfereinrichtung mit einem aktiv fördernden Umleitband arbeitet, welches nicht an der Aufstellfläche der Behälter angreift, sondern an deren Seite. In diesem Fall wird das Umleitband von mindestens zwei Umlenkungen umgelenkt, deren Achsen vertikal ausgerichtet (die Verlängerung der Achsen schneidet vorzugsweise den Erdmittelpunkt) sind. In anderen Worten steht eine die Behälter berührende und fördernde Fläche des Umleitbands senkrecht zu einer horizontalen Ebene.

Vorzugsweise wird das äußere Förderband mittels Elektromotor und Antriebswelle angetrieben, und das innere Förderband ist mittels eines Untersetzungsgetriebes an die Antriebswelle gekoppelt. Die Anzahl der erforderlichen elektrischen Antriebe lässt sich damit reduzieren. Mithilfe des Untersetzungsgetriebes lässt sich auf einfache Weise ein geeignetes Geschwindigkeitsverhältnis zwischen dem äußeren und dem inneren Förderband vorgeben.

Vorzugsweise umfasst das Untersetzungsgetriebe wenigstens zwei mittels Außenkranz ineinander kämmende Zahnräder. Dies vereinfacht eine Anpassung des Untersetzungsverhältnisses von außenliegendem Förderband zu innenliegendem Förderband an ein vorgegebenen Geschwindigkeitsunterschied oder ein vorgegebenes Geschwindigkeitsverhältnis zwischen den Förderbändern.

Vorzugsweise umfasst das Untersetzungsgetriebe ein Planetengetriebe. Dies ermöglicht eine besonders kompakte Bauform mit zueinander fluchtender Antriebswelle und Abtriebswelle.

Beim Einsatz eines Getriebes für das innere Förderband kann es sich auch um ein Schaltgetriebe handeln, welches beispielsweise zwei Gänge aufweist, wobei im ersten Gang eine gegenüber dem äußeren Förderband reduzierte Geschwindigkeit realisiert ist und im zweiten Gang die gleiche Geschwindigkeit realisiert ist wie im äußeren Förderband. Insbesondere ist das Getriebe automatisch umschaltbar.

Vorzugsweise sind für das innere und das äußere Förderband unabhängig voneinander ansteuerbare Elektromotoren vorhanden. Dadurch lassen sich unterschiedliche Geschwindigkeitsverhältnisse oder Geschwindigkeitsunterschiede zwischen äußerem Förderband und innerem Förderband auf einfache Weise und ohne den Austausch von Antriebskomponenten erzeugen.

Vorzugsweise ist das innere Förderband dann direkt angetrieben. Dies ermöglicht eine besonders kompakte Bauform, bei der der Direktantrieb im Bereich des inneren Förderbands getriebelos angebracht ist.

Insbesondere ist es beim Einsatz eines vom Antrieb des äußeren Förderbands unabhängigen Antriebs für das innere Förderband oder beim Einsatz des oben erwähnten Schaltgetriebes in bestimmten Betriebssituationen auch möglich, die äußeren Bänder und die inneren Bänder mit der gleichen Geschwindigkeit anzutreiben.

Die Verwendung gleicher Geschwindigkeiten kann beispielsweise dann notwendig sein, wenn mit maximaler Geschwindigkeit ausgepuffert werden soll, d.h. wenn die Zulaufbahn bei voller Belegung mit Behältern stoppt, aber die Rücklaufbahn mit maximaler Geschwindigkeit leergefahren werden soll. Hier kann es wichtig sein, dass das innere Band auch mit der maximalen Geschwindigkeit betrieben werden kann, um der nachfolgenden Maschine möglichst schnell genügend Behälter zur Verfügung zu stellen.

Eine erfindungsgemäße reduzierte Geschwindigkeit des inneren Bands im Vergleich zum äußeren Band kann beispielsweise dann eingesetzt werden, wenn weder ausgepuffert noch eingepuffert werden muss, d.h. wenn sich der Transferschlitten nicht bewegt.

Vorzugsweise umfasst der Transferstreifen wenigstens eine mit der Zulaufbahn und der Rücklaufbahn fluchtende, stationäre Platte. Dadurch lässt sich ein Umfallen der Behälter beim Überleiten von der Zulaufbahn auf die Rücklaufbahn besonders einfach und effektiv vermeiden.

Vorzugsweise ist die Transfereinrichtung auf einem entlang der Zulaufbahn und der Rücklaufbahn beweglichen Schlitten befestigt. Dadurch lässt sich die Größe bzw. Aufnahmekapazität des Puffertisches an die Behälterströme stromaufwärts und stromabwärts des Puffertisches anpassen.

Vorzugsweise umfasst der Transferstreifen einen mit der Zulaufbahn und der Rücklaufbahn fluchtenden Stellriemen für die Transfereinrichtung. Der Stellriemen hat dann bezüglich der Behälter keine Transportfunktion, sondern dient lediglich einem Verstellen der Transfereinrichtung entlang der Zulaufbahn und der Rücklaufbahn. Der Stellriemen ist somit während des regulären Pufferbetriebs im Wesentlichen stationär oder nur temporär angetrieben. Dadurch lässt sich der für den Transferstreifen vorhandene Platz auf besonders effektive Weise ebenso für den Antrieb der Transfereinrichtung nutzen.

Vorzugsweise umfasst der erfindungsgemäße Puffertisch ferner einen Positionsgeber für die Position der Transfereinrichtung sowie eine Steuereinrichtung zum Einstellen der Fördergeschwindigkeit der inneren und der äußeren Förderbänder in Abhängigkeit von einem Messwert des Positionsgebers. Die Anzahl der auf dem Puffertisch gepufferten Behälter lässt sich dann an die Ist-Größe des Puffertisches und/ oder an Produktionsbedingungen stromaufwärts und/ oder stromabwärts des Puffertisches flexibel und automatisch anpassen.

Ebenfalls ist an eine Kameraüberwachung gedacht, mit der eine Regelung der Geschwindigkeiten der einzelnen Förderbänder und/oder der Transfereinrichtung durchführbar ist. Mit der Kamera wird insbesondere von oben der komplette Pufferbereich optisch erfasst.

Vorzugsweise umfasst der erfindungsgemäße Puffertisch ferner wenigstens eine Zähleinrichtung zum Zählen zulaufender und/oder rücklaufender Behälter sowie eine Steuereinrichtung zum Einstellen der Fördergeschwindigkeiten der inneren und der äußeren Förderbänder in Abhängigkeit von einem Messwert der Zähleinrichtung. Dadurch lässt sich ein Befüllen und/oder Entleeren des Puffertisches in Abhängigkeit von der Anzahl zulaufender und/oder rücklaufender Behälter flexibel und automatisch einstellen.

Wenn beispielsweise durch einen der genannten Sensoren erkannt wird (oder durch das Zählen der Behälter und Vergleichen der von den Behältern beanspruchten bzw. eingenommenen Behälterfläche mit der zur Verfügung stehenden Pufferfläche), dass gar kein Platz zum Umfallen der Behälter vorhanden ist, da jeglicher Platz durch Behälter im Pufferbereich eingenommen wurde, so können beide inneren Bänder auch mit derselben Geschwindigkeit bewegt werden wie die äußeren.

Vorzugsweise sind die Fördergeschwindigkeiten der Zulaufbahn und der Rücklaufbahn getrennt voneinander einstellbar. Insbesondere können die im Wesentlichen durch die Fördergeschwindigkeiten der äußeren Förderbänder vorgegebenen Fördergeschwindigkeiten der Zulaufbahn und der Rücklaufbahn geändert werden, ohne dass in der Zulaufbahn und Rücklaufbahn jeweils herrschende Geschwindigkeitsverhältnis zwischen äußerem und innerem Förderband zu ändern. Somit lässt sich das Füllen und Entleeren des Puffertisches gezielt steuern und gleichzeitig die Kippneigung der umgeleiteten Behälter reduzieren.

Vorzugsweise ist jeweils eine gemeinsame Antriebswelle für sämtliche äußeren Förderbänder der Zulaufbahn und für sämtliche äußeren Förderbänder der Rücklaufbahn ausgebildet. Es sind beispielsweise in der Zulaufbahn und der Rücklaufbahn jeweils mehrere äußere Förderbänder vorhanden, die mit der gleichen Fördergeschwindigkeit laufen und vorzugsweise gemeinsam angetrieben werden.

Insbesondere richtet sich die Verfahrgeschwindikeit der Transfereinrichtung nach einem der äußeren Förderbänder.

Insbesondere grenzt eines der äußeren Förderbänder der Zulaufbahn an das innere Förderband der Zulaufbahn. Das innere Band der Zulaufbahn grenzt insbesondere an den Transferstreifen, welcher ebenfalls an das innere Band der Rücklaufbahn grenzt. Das innere Band der Rücklaufbahn grenzt zusätzlich an eines der äußeren Förderbänder.

Ein weiteres Problem, welches mit einem feststehenden Transferstreifen aufkommen kann, ist, dass Behälter auf diesem stehenbleiben können, ohne weitertransportiert zu werden. Wird von einem Bediener vor einem Formatwechsel nicht reagiert und der auf dem Transferstreifen stehengebliebene Behälter beseitigt, so kann es dazu kommen, dass dieser dann in einem folgenden Produktionsdurchlauf zusammen mit Behältern eines anderen Formats weitertransportiert wird. Dies kann zu erheblichen Problemen in den nachgelagerten Maschinen führen. Daher kann der mittlere Transferstreifen auch lediglich aus einem Luftspalt zwischen den inneren Förderbändern bestehen, sodass die inneren Förderbänder einander benachbart angeordnet sind. Der mittlere Transferstreifen muss demnach nicht unbedingt als Abstützung für die Behälter ausgebildet sein.

Weiterhin ist die Erfindung auch auf eine Anlage gerichtet, bei der der erfindungsgemäße Puffertisch in Produktstromrichtung der Behälter nach einer Füllmaschine zum Befüllen der Behälter mit einem flüssigen Produkt und vor einer Palettiermaschine zum Palettieren der Behälter oder von Behältergebinden angeordnet ist.

Insbesondere ist zwischen dem Puffertisch und der Palettiermaschine eine Packmaschine angeordnet, welche eine gewisse Anzahl von Behältern mittels einer Umverpackung oder durch Klebepunkte zu Gebinden verbindet. Zwischen der Füllmaschine und dem Puffertisch ist insbesondere noch eine Verschließmaschine zum Verschließen der befüllten Behälter mit einem Verschluss, beispielsweise in Form eines Kronkorkens oder Schraubverschlusses, angeordnet. Bei der Füllmaschine, und insbesondere auch bei der Verschließmaschine, handelt es sich bevorzugt um eine kontinuierlich rundlaufende Maschine mit einer Vielzahl von auf einem Karussell angeordneten Abfüll- bzw. Verschließstationen.

Zwischen Verschließmaschine und Puffertisch kann noch eine Etikettiermaschine zum Etikettieren der Behälter angeordnet sein. Alternativ oder zusätzlich kann vor oder unmittelbar nach dem Puffertisch eine Direktdruckmaschine zum Bedrucken der Behälter angeordnet sein, welche insbesondere mittels Inkjet-Druckköpfen Tinte auf die Außenoberfläche der Behälter aufbringt. Vor der Füllmaschine kann im Fall von Kunststoffbehältern noch eine Streckblasmaschine zur Herstellung der Behälter angeordnet sein.

Die gestellte Aufgabe wird auch durch ein Verfahren gemäß Anspruch 15 gelöst. Demnach ist die Erfindung zusätzlich auf ein Verfahren zum Puffern von Behältern gerichtet, bei dem Behälter von Zulaufbahnen über einen dazwischenliegenden Transferstreifen auf Rücklaufbahnen eines Puffertisches mit Hilfe einer Transfereinrichtung übergeleitet werden, wobei die Zulauf- und Rücklaufbahnen entgegengesetzt angetrieben werden. Erfindungsgemäß wird ein inneres Förderband der Zulaufbahn, das zwischen dem Transferstreifen und einem äußeren Förderband der Zulaufbahn angeordnet ist, in zumindest einer Betriebssituation mit einer langsameren Geschwindigkeit angetrieben als das äußere Förderband der Zulaufbahn, und/oder ein inneres Förderband der Rücklaufbahn, das zwischen dem Transferstreifen und einem äußeren Förderband der Rücklaufbahn angeordnet ist, wird in zumindest einer Betriebssituation mit einer langsameren Geschwindigkeit angetrieben als das äußere Förderband der Rücklaufbahn.

Wenn sowohl zwischen einem äußeren Förderband des Zulaufs und dem Transferstreifen als auch zwischen einem äußeren Förderband des Rücklaufs und dem Transferstreifen ein langsameres inneres Förderband angeordnet ist, sind zwei langsamer laufende innere Förderbänder vorhanden, die vorzugsweise auch in entgegengesetzte Richtungen angetrieben werden.

Der Transferstreifen kann dabei wie zuvor erwähnt beispielsweise eine feststehende Überschubplatte, ein Luftspalt oder dergleichen sein und er ist insbesondere in einer Längsrichtung und parallel zu den Zulauf- bzw. Rücklaufbahnen angeordnet. Das innere Förderband bzw. die inneren Förderbänder müssen nicht immer mit langsamerer Geschwindigkeit angetrieben werden, sondern können auch je nach Betriebssituation gleich schnell oder sogar schneller angetrieben werden als die äußeren.

Insbesondere umfasst der Puffertisch insgesamt mindestens drei Förderbänder, wobei der Zulaufbahn und der Rücklaufbahn jeweils ein äußeres Förderband zugeordnet ist und entweder der Zulauf- oder der Rücklaufbahn ein langsamer angetriebenes inneres Förderband.

Um die Wahrscheinlichkeit eines Umfallens der Behälter weiter zu senken, umfasst der Puffertisch insgesamt mindestens vier Förderbänder, wobei der Zulaufbahn und der Rücklaufbahn jeweils ein äußeres Förderband und ein langsamer angetriebenes inneres Förderband zugeordnet ist.

Um die Kapazität des Puffertisches zu erhöhen, umfasst dieser insgesamt mindestens fünf, bevorzugt mindestens sieben Förderbänder wobei der Zulaufbahn und der Rücklaufbahn jeweils mindestens zwei, bevorzugt mindestens drei äußere Förderbänder zugeordnet sind und entweder der Zulauf- oder der Rücklaufbahn ein erstes, langsamer angetriebenes inneres Förderband zugeordnet ist. Um die Wahrscheinlichkeit eines Umfallens der Behälter eines Puffertisches mit mindestens fünf oder sieben Förderbändern zu senken, kann der Puffertisch noch ein zweites, langsamer angetriebenes, inneres Förderband umfassen, welches dem ersten inneren Förderband - gespiegelt an einer vertikalen Fläche durch den Transferstreifen - gegenüberliegt und dem ersten entgegengesetzt angetrieben wird.

Denkbar ist auch eine ungleichmäßige Verteilung der äußeren Förderbänder auf den Zulauf und den Rücklauf. So kann der Zulauf beispielsweise mindestens ein äußeres Förderband mehr umfassen als der Rücklauf oder umgekehrt.

Um die Kippneigung der Behälter bei der Überführung noch weiter zu senken, kann zwischen dem inneren, langsamer angetriebenen Förderband und einem äußeren Förderband noch ein weiteres Förderband angeordnet sein, welches mit einer Geschwindigkeit angetrieben wird, welche vom Betrag zwischen der des einen äußeren Förderbandes und der des inneren Förderbandes liegt.

Dies kann auch auf beiden Seiten des Transferstreifens zum Einsatz kommen.

Auch ist an eine kaskadenförmige Steigerung der Beträge der Geschwindigkeiten aller Förderbänder von innen nach außen gedacht, wobei bis auf das innerste Förderband bzw. die zwei innersten Förderbänder, jedes Förderband schneller angetrieben wird als sein benachbartes weiter innen liegendes Förderband.

Denkbar ist zudem eine Überwachung der Betriebssituation mit einer eingangs genannten Kamera. Auf Basis einer Auswertung kann auch eine Regelung der Geschwindigkeit der einzelnen inneren und/oder äußeren Förderbänder vorgenommen werden. Wird beispielsweise abhängig vom Behälterformat festgestellt, dass bei einer bestimmten Flaschensorte während einer bestimmten Zeitspanne oder nach einer bestimmten Anzahl von übergeleiteten Behältern keine oder nur wenig Behälter im Transferbereich am Transferstreifen umfallen oder stehenbleiben (wenig Störungen), so kann eine Fördergeschwindigkeit der inneren Förderbänder bzw. des inneren Förderbands um einen vorgegebenen Wert angehoben werden. Kommt es hingegen zu vielen Störungen, so wird eine Geschwindigkeit der inneren Förderbänder geringer gewählt.

Eine bevorzugte Ausführungsform des erfindungsgemäßen Puffertisches ist in den Zeichnungen dargestellt. Es zeigen:
Fig. 1 eine schematische Draufsicht auf den erfindungsgemäßen Puffertisch;
Fig. 2 einen schematischen Längsschnitt durch eine erfindungsgemäße Antriebswelle mit Planetengetriebe; und
Fig. 3 einen schematischen Längsschnitt durch eine erfindungsgemäße Antriebswelle mit einem Untersetzungsgetriebe basierend auf Zahnrädern mit Außenkranz.

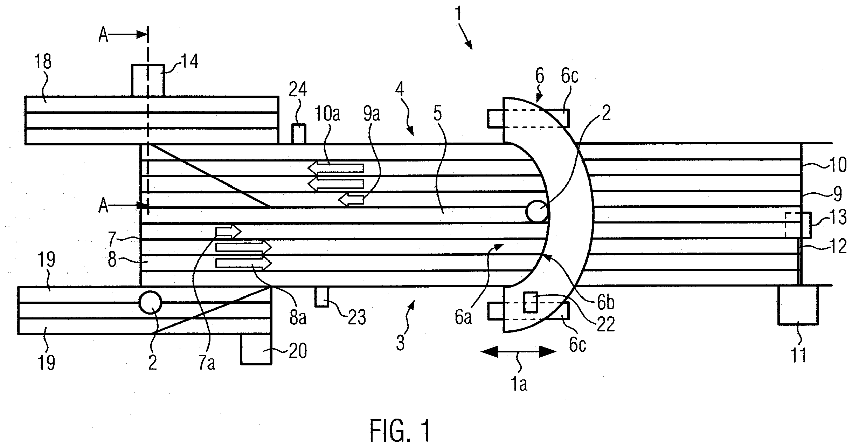

Wie die Fig. 1 erkennen lässt, umfasst der erfindungsgemäße Puffertisch 1 für Behälter 2 in einer bevorzugten Ausführungsform eine Zulaufbahn 3 und eine entgegengesetzt laufende Rücklaufbahn 4, zwischen denen ein Transferstreifen 5 ausgebildet ist. Zum Überleiten der Behälter 2 von deren Zulaufbahn 3 auf die Rücklaufbahn 4 ist eine Transfereinrichtung 6 vorhanden, die vorzugsweise in Längsrichtung 6a entlang der Zulaufbahn 3 und der Rücklaufbahn 4 mittels eines Motors verschiebbar ist.

Die Zulaufbahn 3 umfasst ein an den Transferstreifen 5 angrenzendes inneres Förderband 7 sowie wenigstens ein äußeres Förderband 8, im gezeigten Beispiel drei äußere Förderbänder 8. Die Rücklaufbahn 4 umfasst ein an den Transferstreifen 5 angrenzendes inneres Förderband 9 und wenigstens ein äußeres Förderband 10, im gezeigten Beispiel drei äußere Förderbänder 10. Das innere Förderband 7 der Zulaufbahn 3 läuft mit einer Geschwindigkeit 7a (symbolisiert durch einen kurzen Blockpfeil), die kleiner ist als die Geschwindigkeit 8a des wenigstens einen äußeren Förderbands 8 (symbolisiert durch einen langen Blockpfeil). Entsprechend läuft das innere Förderband 9 der Rücklaufbahn 4 mit einer Geschwindigkeit 9a, die kleiner ist als die Geschwindigkeit 10a des wenigstens einen äußeren Förderbands 10 der Rücklaufbahn 4.

Die beiden inneren Förderbänder 7, 9 können in einer nicht gezeigten Ausführungsform auch so betrieben werden, dass nur eines mit einer geringeren Fördergeschwindigkeit 7a, 9a läuft als das zugeordnete äußere Förderband. Ebenso ist es möglich, im Betrag vier unterschiedliche Geschwindigkeiten 7a bis 10a mit den vier Bändern 7, 8, 9, 10 gleichzeitig zu realisieren.

Die Fördergeschwindigkeit der Behälter 2 in der Zulaufbahn 3 ist im Wesentlichen durch die Geschwindigkeit 8a des wenigstens einen äußeren Förderbands 8 vorgegeben, die Fördergeschwindigkeit der Behälter 2 in der Rücklaufbahn 4 durch die Geschwindigkeit 10a des wenigstens einen äußeren Förderbands 10 der Rücklaufbahn 4, insbesondere unter Verwendung wenigstens eines Antriebs der äußeren Förderbändern 8, 10 zum Antrieb des zugeordneten inneren Förderbands 7, 9.

In einem Transferbereich 6a der Transfereinrichtung 6 werden die Behälter 2 aufrecht stehend vorzugsweise durch Staudruck entlang einer geeignet bezüglich der Förderrichtung der Zulaufbahn 3 und der Rücklaufbahn 4 geneigten und/oder gekrümmten Umlenkschiene 6b von der Zulaufbahn 3 über den Transferstreifen 5 auf die Rücklaufbahn 4 geleitet. Es wäre ebenso denkbar im Bereich der Umlenkschiene 6b wenigstens einen aktiv angetriebenen Umlenkriemen oder dergleichen auszubilden. Die Transfereinrichtung 6 ist zum Verstellen in der Längsrichtung 6a der Zulaufbahn 3 und der Rücklaufbahn 4 beispielsweise auf (lediglich schematisch angedeuteten) linear geführten Schlitten 6c befestigt.

Die Transfereinrichtung 6 kann quer zur Förderrichtung auch nur in einem Bereich auf die Behälter 2 wirken, welcher lediglich die Zulaufbahn 3 und optional den Transferstreifen 5 überdeckt (nicht gezeigt). In der gezeigten Ausführungsform überspannt die Transfereinrichtung 6 auch die Rücklaufbahn 4.

Der Transferstreifen 5 kann als stationäre Platte oder dergleichen ausgebildet sein. Ebenso wäre es denkbar, den Transferstreifen 5 als Stellriemen für die Transfereinrichtung 6 auszubilden, um diese in Längsrichtung 6a zu verstellen. Der Transferstreifen 5 könnte ebenso von einem mittleren Förderband gebildet werden, das während des regulären Pufferbetriebs stillsteht oder arretiert wird. Es ist dann antriebstechnisch sowohl von der Zulaufbahn 3 als auch von der Rücklaufbahn 4 entkoppelt. Ebenso könnte der Transferstreifen 5 von einem Luftspalt (nicht gezeigt) gebildet werden, der ausreichend schmal ist, um ein Kippen der Behälter 2 beim Transfer zwischen den inneren Förderbändern 7, 9 zu vermeiden.

Für den Antrieb der Zulaufbahn 3 ist beispielhaft ein Elektromotor 11 mit einer Antriebswelle 12 vorhanden. Die äußeren Förderbänder 8 sind dann vorzugsweise gemeinsam von der Antriebswelle 12 unmittelbar angetrieben. Für das innere Förderband 7 der Zulaufbahn 3 kann beispielsweise ein separater Elektromotor 13 vorhanden sein, der insbesondere als Direktantrieb des inneren Förderbands 7 ausgebildet ist, also ohne zwischengeschaltete(s) Getriebe oder Übersetzung.

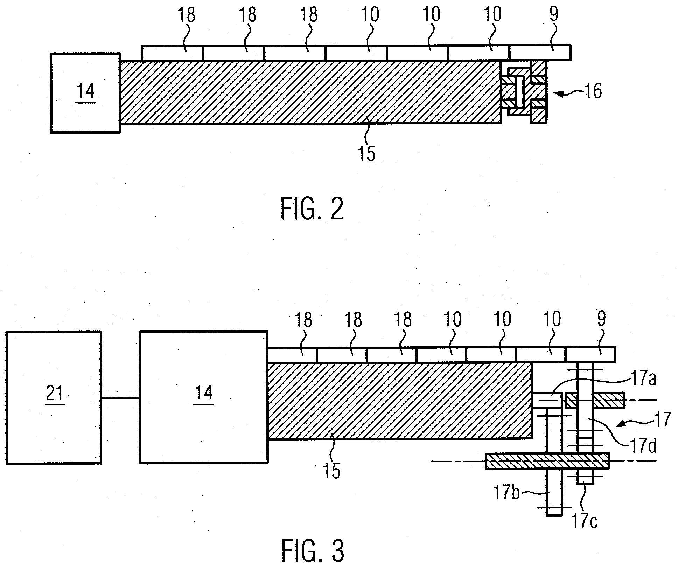

Im Bereich der Rücklaufbahn 4 ist für ihren Antrieb ein weiterer Elektromotor 14 vorhanden, der die äußeren Förderbänder 10 gemeinsam mittels einer in den Fig. 2 und 3 dargestellten Antriebswelle 15 antreibt.

Die Figur 2 zeigt einen Längsschnitt entlang der Schnittlinie A - A durch die Antriebswelle 15 mit einem schematisch angedeuteten und als (Doppel-)Planetengetriebe ausgebildeten Untersetzungsgetriebe 16 zur Kopplung des inneren Förderbands 9 mit der Antriebswelle 15. Als funktionell entsprechende Alternative hierzu zeigt die Figur 3 ein Untersetzungsgetriebe 17 mit Zahnrädern oder gezahnten Wellen 17a bis 17d, die mittels Außenkranz ineinander kämmen. Unabhängig vom Typ des Untersetzungsgetriebes 16, 17 ist dieses derart ausgebildet, dass das innere Förderband 9 langsamer läuft als das jeweils benachbarte äußere Förderband 10. Bei dem gezeigten Doppelplanetengetriebe ist das Hohlrad der ersten Stufe (links) fest mit dem Sonnenrad der zweiten Stufe (rechts) verbunden, insbesondere einteilig ausgebildet.

Die erfindungsgemäße Geschwindigkeitsabstufung zwischen dem inneren Förderband 7, 9 und dem jeweils zugeordneten wenigstens einen äußeren Förderband 8, 10 lässt sich prinzipiell sowohl mit separaten Elektromotoren 11, 13, 14 als auch mittels mechanischer Untersetzungsgetriebe 16, 17 erzeugen. Hierbei sind die gezeigten Antriebsvarianten beliebig untereinander austauschbar und/oder kombinierbar.

Der Vollständigkeit halber sind in den Figuren ausgangsseitige Förderbänder 18 dargestellt, die beispielsweise gemeinsam mit den äußeren Förderbändern 10 der Rücklaufbahn 4 vom Elektromotor 14 und der zugehörigen Antriebswelle 15 angetrieben werden können. Ebenso wäre ein separater Antrieb für die ausgangsseitigen Förderbänder 18 denkbar, wie dies für eingangsseitige Förderbänder 19 und einen zugehörigen Elektromotor 20 schematisch angedeutet ist, und umgekehrt.

Mit einer Steuereinrichtung 21, die in der Figur 3 schematisch angedeutet ist, können die jeweils vorhandenen Elektromotoren 11, 13, 14, 20 angesteuert und/oder Messwerte verarbeitet werden. Beispielsweise werden mit der Steuereinheit 21 die Elektromotoren 11, 14 der Zulaufbahn 3 und der Rücklaufbahn 4 separat voneinander angesteuert, um die jeweiligen Fördergeschwindigkeiten in der Zulaufbahn 3 und in der Rücklaufbahn 4 an Produktionsbedingungen stromaufwärts und stromabwärts des Puffertisches 1 und/oder an die eingestellte Größe des Puffertisches 1 und die Anzahl der auf diesem gepufferten Behälter 2 anzupassen.

Die Elektromotoren 11, 13, 14 und/oder 20 werden beispielsweise in Abhängigkeit von Messwerten eines Positionsgebers 22, der die Position der Transfereinrichtung 6 entlang der Zulaufbahn 3 und in der Rücklaufbahn 4 misst, angesteuert. Alternativ oder ergänzend werden die Elektromotoren 11, 13, 14 und/oder 20 ferner in Abhängigkeit von Messwerten wenigstens einer Zähleinrichtung 23, 24 zum Zählen zulaufender und/oder rücklaufender Behälter 2 angesteuert. Somit können das Füllen und Entleeren des Puffertisches 1 und die Anzahl der darauf gespeicherten Behälter 2 in Abhängigkeit von der Puffergröße, die im Wesentlichen von der Position der Transfereinrichtung 6 vorgegebenen ist, und/oder in Abhängigkeit von den einlaufenden und auslaufenden Behälterströmen gezielt gesteuert werden. Die Zähleinrichtungen 23, 24 können auch bei den Bändern 18, 19 angeordnet sein.

Beispielsweise wird die Fördergeschwindigkeit der Zulaufbahn 3 zum Füllen des Puffertisches 1 größer eingestellt als die Fördergeschwindigkeit der Rücklaufbahn 4, für das Entleeren des Puffertisches 1 entsprechend in umgekehrtem Verhältnis. Vorzugsweise bleibt das Geschwindigkeitsverhältnis zwischen den inneren Förderbändern 7, 9 und den jeweils benachbarten äußeren Förderbändern 8, 10 dabei unverändert.

Ein derart unverändertes Geschwindigkeitsverhältnis wird auf einfache Weise durch das Untersetzungsverhältnis des Untersetzungsgetriebes 16, 17 vorgegeben. Ebenso könnte das Geschwindigkeitsverhältnis durch entsprechende Ansteuerung separater Antriebsmotoren 11, 13 vorgegeben sein. Im Falle separater Elektromotoren 11, 13 für die äußeren und inneren Förderbänder 8, 7 ließen sich sowohl variabel einstellbare Geschwindigkeitsverhältnisse erzeugen als auch ein beim Ändern der Fördergeschwindigkeit 8a, 10a gleichbleibender Geschwindigkeitsunterschied zu den Geschwindigkeiten 7a, 9a der jeweils benachbarten inneren Förderbänder 7, 9.

Um die Kippneigung der im Bereich der Transfereinrichtung 6 über den Transferstreifen 5 geleiteten Behälter 2 zu reduzieren, beträgt die Geschwindigkeit 7a, 9a der inneren Förderbänder 7, 9 vorzugsweise die Hälfte der Geschwindigkeit 8a, 10a der äußeren Förderbänder 8, 10. Je nach praktischer Anforderung und Standfestigkeit der gepufferten Behälter 2 können jedoch auch davon abweichende Geschwindigkeitsverhältnisse vorteilhaft sein, beispielsweise im Bereich von 0,45 bis 0,6, von 0,4 bis 0,75 oder von 0,3 bis 0,9.

Es wäre auch denkbar, den Transferstreifen 5 ein wenig tiefer (z.B. 0,1 mm bis 1 mm) anzuordnen als die Zuführbahn 3, und die Rücklaufbahn 4 ein wenig tiefer (z.B. 0,1 mm bis 1 mm) als den Transferstreifen 5. Ein Hemmen der Behälter beim Übergang zwischen den Bändern und dem Streifen lässt sich dadurch zuverlässig vermeiden, was das Kippmoment reduzieren kann.

Mithilfe der jeweils langsamer laufenden inneren Förderbänder 7, 9 ermöglicht der erfindungsgemäße Puffertisch 1 einen zuverlässigen Transfer aufrecht stehender Behälter 2, wie beispielsweise Flaschen, von der Zulaufbahn 3 auf die Rücklaufbahn 4.

## Patentansprüche

1. Puffertisch (1) für Behälter (2), mit einander entgegengesetzt angetriebenen Zulauf- und Rücklaufbahnen (3, 4), mit einem in Längsrichtung (6a) dazwischen verlaufenden Transferstreifen (5), und mit einer Transfereinrichtung (6) zum Überleiten der Behälter (2) von der Zulaufbahn (3) über den Transferstreifen (5) auf die Rücklaufbahn (4),
**dadurch gekennzeichnet, dass**
die Zulaufbahn (3) ein äußeres Förderband (8) und ein zwischen diesem und dem Transferstreifen (5) verlaufendes inneres Förderband (7) umfasst, das langsamer angetrieben ist als das äußere Förderband (8) der Zulaufbahn, und/oder die Rücklaufbahn (4) ein äußeres Förderband (10) und ein zwischen diesem und dem Transferstreifen (5) verlaufendes inneres Förderband (9) umfasst, das langsamer angetrieben ist als das äußere Förderband (10) der Rücklaufbahn.

2. Puffertisch nach Anspruch 1, wobei das äußere Förderband (10) mittels Elektromotor (14) und Antriebswelle (15) angetrieben ist und das innere Förderband (9) mittels eines Untersetzungsgetriebes (16, 17) an die Antriebswelle (15) gekoppelt ist.

3. Puffertisch nach Anspruch 2, wobei das Untersetzungsgetriebe (17) wenigstens zwei mittels Außenkranz ineinander kämmende Zahnräder und/oder gezahnte Wellen (17a bis 17d) umfasst.

4. Puffertisch nach Anspruch 2, wobei das Untersetzungsgetriebe (16) ein Planetengetriebe umfasst.

5. Puffertisch nach Anspruch 1, wobei für das innere und das äußere Förderband (7, 8) unabhängig voneinander steuerbare Elektromotoren (13, 11) vorhanden sind.

6. Puffertisch nach Anspruch 5, wobei das innere Förderband (7) direkt angetrieben ist.

7. Puffertisch nach wenigstens einem der vorigen Ansprüche, wobei der Transferstreifen (5) wenigstens eine mit der Zulaufbahn (3) und der Rücklaufbahn (4) fluchtende, stationäre Platte umfasst.

8. Puffertisch nach wenigstens einem der vorigen Ansprüche, wobei die Transfereinrichtung (6) auf wenigstens einem entlang der Zulaufbahn (3) und der Rücklaufbahn (4) bewegbaren Schlitten (6c) befestigt ist.

9. Puffertisch nach Anspruch 8, wobei der Transferstreifen (5) einen mit der Zulaufbahn (3) und der Rücklaufbahn (4) fluchtenden Stellriemen für die Transfereinrichtung (6) umfasst.

10. Puffertisch nach Anspruch 8 oder 9, ferner mit einem Positionsgeber (22) für die Position der Transfereinrichtung (6), und mit einer Steuereinrichtung (21) zum Einstellen der Geschwindigkeiten (7a bis 10a) der inneren und der äußeren Förderbänder (7 bis 10) in Abhängigkeit von einem Messwert des Positionsgebers (22).

11. Puffertisch nach wenigstens einem der vorigen Ansprüche, ferner mit wenigstens einer Zähleinrichtung (23, 24) zum Zählen zulaufender und/oder rücklaufender Behälter (2), und mit einer Steuereinrichtung (21) zum Einstellen der Geschwindigkeiten (7a bis 10a) der inneren und der äußeren Förderbänder (7 bis 10) in Abhängigkeit von wenigstens einem Messwert der Zähleinrichtung (23, 24).

12. Puffertisch nach wenigstens einem der vorigen Ansprüche, wobei die Fördergeschwindigkeiten der Zulaufbahn (3) und der Rücklaufbahn (4) getrennt voneinander einstellbar sind.

13. Puffertisch nach wenigstens einem der vorigen Ansprüche, wobei jeweils eine gemeinsame Antriebswelle (15) für sämtliche äußeren Förderbänder der Zulaufbahn und für sämtliche äußeren Förderbänder (10) der Rücklaufbahn (4) ausgebildet ist.

14. Anlage mit einer Füllmaschine zum Befüllen der Behälter (2) mit einem flüssigen Produkt und einer Palettiermaschine zum Palettieren der Behälter (2) oder von Behältergebinden, **dadurch gekennzeichnet, dass** ein Puffertisch (1) nach wenigstens einem der vorigen Ansprüche stromabwärts der Füllmaschine und stromaufwärts der Palettiermaschine angeordnet ist.

15. Verfahren zum Puffern von Behältern (2), bei dem Behälter (2) von Zulaufbahnen (3) über einen dazwischenliegenden Transferstreifen (5) auf Rücklaufbahnen (4) eines Puffertisches mit Hilfe einer Transfereinrichtung (6) übergeleitet werden, wobei die Zulauf- und Rücklaufbahnen (3, 4) entgegengesetzt angetrieben werden, **dadurch gekennzeichnet, dass** ein inneres Förderband (7) der Zulaufbahn (3), das zwischen dem Transferstreifen (5) und einem äußeren Förderband (8) der Zulaufbahn (3) angeordnet ist, in zumindest einer Betriebssituation mit einer langsameren Geschwindigkeit angetrieben wird als das äußere Förderband (8) der Zulaufbahn (3) und/oder ein inneres Förderband (9) der Rücklaufbahn (4), das zwischen dem Transferstreifen (5) und einem äußeren Förderband (10) der Rücklaufbahn (4) angeordnet ist, in zumindest einer Betriebssituation mit einer langsameren Geschwindigkeit angetrieben wird als das äußere Förderband (10) der Rücklaufbahn (4).

## Claims

1. Storage table (1) for containers, with oppositely driven feed and return tracks (3, 4), with a transfer strip (5) extending thereinbetween in longitudinal direction (6a), and with a transfer device (6) for transferring the containers (2) from the feed track (3) via the transfer strip (5) to the return track (4),
**characterized in that**
the feed track (3) comprises an outer conveyor belt (8) and an inner conveyor belt (7) which extends between said outer conveyor belt and the transfer strip (5) and which is driven more slowly than the outer conveyor belt (8) of the feed track, and/or the return track (4) comprises an outer conveyor belt (10) and an inner conveyor belt (9) which extends between said outer conveyor belt and the transfer strip (5) and which is driven more slowly than the outer conveyor belt (10) of the return track.

2. Storage table according to claim 1, wherein the outer conveyor belt (10) is driven with the help of electric motor (14) and drive shaft (15) and the inner conveyor belt (9) is coupled with the help of a reduction gear (16, 17) to the drive shaft (15).

3. Storage table according to claim 2, wherein the reduction gear (17) comprises at least two gears and/or toothed shafts (17a to 17d) meshing with one another by way of outer rim.

4. Storage table according to claim 2, wherein the reduction gear (16) comprises a planetary gear.

5. Storage table according to claim 1, wherein electric motors (13, 11) that are controllable independently of one another are provided for the inner and the outer conveyor belt (7, 8).

6. Storage table according to claim 5, wherein the inner conveyor belt (7) is directly driven.

7. Storage table according to at least one of the preceding claims, wherein the transfer strip (5) comprises at least one stationary plate aligned with the feed track (3) and the return track (4).

8. Storage table according to at least one of the preceding claims, wherein the transfer device (6) is attached to at least one slide (6c) which is movable along the feed track (3) and the return track (4).

9. Storage table according to claim 8, wherein the transfer strip (5) comprises an adjusting belt aligned with the feed track (3) and the return track (4) for the transfer device (6).

10. Storage table according to claim 8 or 9, further comprising a position encoder (22) for the position of the transfer device (6), and comprising a control device (21) for adjusting the speeds (7a to 10a) of the inner and the outer conveyor belts (7 to 10) in response to a measurement value of the position encoder (22).

11. Storage table according to at least one of the preceding claims, further comprising at least one counting device (23, 24) for counting containers (2) which are fed and/or returned, and comprising a control device (21) for setting the speeds (7a to 10a) of the inner and the outer conveyor belts (7 to 10) in response to at least one measurement value of the counting device (23, 24).

12. Storage table according to at least one of the preceding claims, wherein the conveying speeds of the feed track (3) and the return track (4) are adjustable independently of one another.

13. Storage table according to at least one of the preceding claims, wherein a common drive shaft (15) is respectively formed for all outer conveyor belts of the feed track and for all outer conveyor belts (10) of the return track (4).

14. System with a filling machine for filling the containers (2) with a liquid product and a palletizer for palletizing the containers (2) or container packages, **characterized in that** a storage table (1) according to at least one of the preceding claims is arranged downstream of the filling machine and upstream of the palletizer.

15. Method for storing containers (2), in which containers (2) are transferred from feed tracks (3) via an interposed transfer strip (5) to return tracks (4) of a storage table with the help of a transfer device (6), wherein the feed and return tracks (3, 4) are oppositely driven, **characterized in that** an inner conveyor belt (7) of the feed track (3) which is arranged between the transfer strip (5) and an outer conveyor belt (8) of the feed track (3) is driven in at least one operating situation at a slower speed than the outer conveyor belt (8) of the feed track (3), and/or an inner conveyor belt (9) of the return track (4) which is arranged between the transfer strip (5) and an outer conveyor belt (10) of the return track (4) is driven in at least one operating situation at a slower speed than the outer conveyor belt (10) of the return track (4).

## Revendications

1. Table de stockage tampon (1) pour contenants (2), comprenant des voies d'arrivée et de retour (3, 4) entraînées de manière mutuellement opposée, une piste de transfert (5), qui s'étend entre lesdites voies dans la direction longitudinale (6a), et un dispositif de transfert (6) pour transférer les contenants (2) de la voie d'arrivée (3) sur la voie de retour (4) par l'intermédiaire de la piste de transfert (5),
**caractérisée en ce que**
la voie d'arrivée (3) comprend une bande de transport extérieure (8) et, agencée entre celle-ci et la piste de transfert (5), une bande de transport intérieure (7), qui est entraînée plus lentement que la bande de transport extérieure (8) de la voie d'arrivée, et/ou la voie de retour (4) comprend une bande de transport extérieure (10) et, agencée entre celle-ci et la piste de transfert (5), une bande de transport intérieure (9), qui est entraînée plus lentement que la bande de transport extérieure (10) de la voie de retour.

2. Table de stockage tampon selon la revendication 1, dans laquelle la bande de transport extérieure (10) est entraînée au moyen d'un moteur électrique (14) et d'un arbre d'entraînement (15), et la bande de transport intérieure (9) est couplée à l'arbre d'entraînement (15) au moyen d'un réducteur (16, 17).

3. Table de stockage tampon selon la revendication 2, dans laquelle le réducteur (17) comprend au moins deux roues dentées et/ou arbres dentés (17a à 17d) engrenant mutuellement par couronne extérieure.

4. Table de stockage tampon selon la revendication 2, dans laquelle le réducteur (16) comprend un train planétaire.

5. Table de stockage tampon selon la revendication 1, dans laquelle des moteurs électriques (13, 11) pouvant être commandés indépendamment l'un de l'autre, sont prévus pour la bande de transport intérieure et extérieure (7, 8).

6. Table de stockage tampon selon la revendication 5, dans laquelle la bande de transport intérieure (7) est entraînée directement.

7. Table de stockage tampon selon l'une au moins des revendications précédentes, dans laquelle la piste de transfert (5) comprend au moins un plateau stationnaire aligné avec la voie d'arrivée (3) et la voie de retour (4).

8. Table de stockage tampon selon l'une au moins des revendications précédentes, dans laquelle le dispositif de transfert (6) est fixé sur au moins un chariot (6c) déplaçable le long de la voie d'arrivée (3) et de la voie de retour (4).

9. Table de stockage tampon selon la revendication 8, dans laquelle la piste de transfert (5) comprend une courroie de réglage pour le dispositif de transfert (6), qui est alignée avec la voie d'arrivée (3) et la voie de retour (4).

10. Table de stockage tampon selon la revendication 8 ou la revendication 9, comprenant, par ailleurs, un capteur de position (22) pour la position du dispositif de transfert (6), et comprenant un dispositif de commande (21) pour régler les vitesses (7a à 10a) des bandes de transport intérieures et extérieures (7 à 10) en fonction d'une valeur de mesure du capteur de position (22).

11. Table de stockage tampon selon l'une au moins des revendications précédentes, comprenant par ailleurs, au moins un dispositif de comptage (23, 24) pour le comptage de contenants (2) arrivant et/ou retournant, et comprenant un dispositif de commande (21) pour régler les vitesses (7a à 10a) des bandes de transport intérieures et extérieures (7 à 10) en fonction d'au moins une valeur de mesure du dispositif de comptage (23, 24).

12. Table de stockage tampon selon l'une au moins des revendications précédentes, dans laquelle les vitesses de transport de la voie d'arrivée (3) et de la voie de retour (4) peuvent être réglées séparément les unes des autres.

13. Table de stockage tampon selon l'une au moins des revendications précédentes, dans laquelle il est réalisé respectivement un arbre d'entraînement commun (15) pour l'ensemble des bandes de transport extérieures de la voie d'arrivée, et un pour l'ensemble des bandes de transport extérieures (10) de la voie de retour (4).

14. Installation comprenant une machine de remplissage pour remplir des contenants (2) avec un produit liquide, et une machine de palettisation pour assurer la palettisation des contenants (2) ou de packs de contenants, **caractérisé en ce qu'**une table de stockage tampon (1) selon l'une au moins des revendications précédentes est agencée en aval de la machine de remplissage et en amont de la machine de palettisation.

15. Procédé pour assurer un stockage tampon de contenants (2), d'après lequel des contenants (2) sont transférés de voies d'arrivée (3), en passant par l'intermédiaire d'une piste de transfert (5), à des voies de retour (4) d'une table de stockage tampon, à l'aide d'un dispositif de transfert (6), les voies d'arrivée et de retour (3, 4) étant entraînées de manière opposée, **caractérisé en ce qu'**une bande de transport intérieure (7) de la voie d'arrivée (3), qui est agencée entre la piste de transfert (5) et une bande de transport extérieure (8) de la voie d'arrivée (3), est entraînée, au moins dans une situation de fonctionnement, avec une vitesse plus lente que la bande de transport extérieure (8) de la voie d'arrivée (3), et/ou une bande de transport intérieure (9) de la voie de retour (4), qui est agencée entre la piste de transfert (5) et une bande de transport extérieure (10) de la voie de retour (4), est entraînée, au moins dans une situation de fonctionnement, avec une vitesse plus lente que la bande de transport extérieure (10) de la voie de retour (4).
